# EUROPEAN PATENT APPLICATION

(11) **EP 4 711 595 A1**
(43) Date of publication of application: **18.03.2026**
(21) Application number: 24382989.2
(22) Date of filing: 16.09.2024
(51) Int. Cl.: F02B 37/16, F02B 39/16, F02D 41/00, F02M 35/10, F02B 29/04, F16K 17/20

(54) **ENGINE SYSTEM COMPRISING AN AIR INTAKE STAGNATION CLEANING DEVICE AND AIR INTAKE STAGNATION CLEANING METHOD**

(71) Applicant: Horse Powertrain Solutions, S.L.U., 28108 Alcobendas (Madrid) (ES)
(72) Inventor: GOUVEA, Moises, São José dos Pinhais-PR (BR)
(74) Representative: Elzaburu S.L.P.

(57) **Abstract**

Engine system comprising an air intake stagnation cleaning device comprising:
- a unidirectional purge valve (9) located in a connecting pipe (6) between a cooler (8) and an air intake throttle (7),
- means for determining the temperature of the air entering a turbocharged engine (1) from the connecting pipe (6), and
- a control unit (10) in communication with the unidirectional purge valve (9) and with the means for determining the temperature and being configured to receive a measured temperature from the means for determining the temperature, to compare it with a predetermined temperature value and to open and/or close the unidirectional purge valve (9) as a result of the comparison so that the unidirectional purge valve (9) purges air from the connecting pipe (6).

## Description

### FIELD OF THE INVENTION

The present invention relates to the field of turbocharged engines with an air or water cooler.

### BACKGROUND OF THE INVENTION

Turbocharged engines with a cooler are known in the state of the art. The known turbocharged engines comprise an engine associated with an air intake circuit and with an exhaust gas circuit.

The air intake circuit comprises a compressor of a turbo-compressor, an air cooler, an air intake throttle, an air intake manifold and an air filter.

The exhaust gas circuit comprises an exhaust manifold, a turbine of the turbo-compressor. It may additionally comprise after-treatment devices such as a three way-catalyst if the engine is a spark ignition engine and a gasoline particulate filter. Of course, variants are also known, for instance, if the engine is a Diesel engine the three way-catalyst will be replaced by a Diesel Oxydation Catalyst.

Turbocharged engines need to reduce the gas temperature from the air intake system after the air has passed the compressor and before entering into the engine air manifold in order to avoid performance problems. It's common to use air intercoolers or water intercoolers. The temperature at the exit of the compressor is usually around 90°C - 100°C while the optimum temperature at the entrance of the turbocharged engine is around 70 °C.

Turbocharged engines are usually mounted on vehicles. Some vehicle underhood layouts or some atmospheric conditions increase the temperature after cooling it on the intercoolers. High temperature on engine air collectors could cause serious performance problems. It could lead to the vehicle not performing a take-off due the hot stagnation in the engine mouth. In some severe cases, like vehicle idle after cruise velocity, the reminiscent heat from high velocity creates a hot area in the underhood of the vehicle. The air intake system reduces the intake velocity and so the temperature before engine collector increases. This phenomena reduce the efficiency of the engine in reducing the overall gas temperature.

Altitude in relation to the sea level may also pose a drawback for the intake of the engines. And also, the type of traffic in cities, with continuous stops and starts may lead to the above mentioned engine problems.

Thus, the temperature on the intake of the engine is affected by the surrounding temperature, the altitude, the vehicle speed and the type of traffic.

Some known turboengines additionally comprise an intercooler motor-fan-shroud device located in the proximities of the intake tube that helps to reduce the warm air in the underhood of the vehicle in hot climate conditions.

It is the purpose of the invention to solve the above mentioned problem.

### SUMMARY OF THE INVENTION

It is an object of the invention an engine system comprising an air intake stagnation cleaning device, the engine system comprising:
- a turbocharged engine,
- an intake manifold in connection with the turbocharged engine configured for directing air towards the turbocharged engine,
- an air intake,
- a compressor of a turbo-compressor in connection with the air intake and configured for compressing the air taken through the air intake and in connection with the intake manifold for directing the compressed air towards the intake manifold,
- a connecting pipe connecting the compressor with the intake manifold,
- a turbine of the turbo-compressor, the compressor being coupled to the turbine,
- a cooler located in the connecting pipe for cooling the air compressed by the compressor,
- an air intake throttle located between the connecting pipe and the intake manifold.

The air intake stagnation cleaning device comprises:
- a unidirectional purge valve located in the connecting pipe between the cooler and the air intake throttle,
- means for determining the temperature of the air entering the turbocharged engine from the connecting pipe, and
- a control unit in communication with the unidirectional purge valve and with the means for determining the temperature and being configured to receive a measured temperature from the means for determining the temperature, to compare it with a predetermined temperature value and to open and/or close the unidirectional purge valve as a result of the comparison so that the unidirectional purge valve purges air from the connecting pipe.

According to the above, the claimed invention proposes to add a purge unidirectional valve controlled by a control unit, for instance an ECU (acronym for: Engine Control Unit), between the cooler and the air intake throttle and means to determine the temperature. Thus, the unidirectional purge valve reduces the air temperature before the engine operated by the ECU which, in an embodiment, opens for milliseconds the valve towards the underhood exterior.

The valve is unidirectional as the invention promotes to exhaust air and not to take additional air for the exterior than may have a high temperature.

In an embodiment, the cooler is an air cooler, although a water cooler is also possible.

Thus, the claimed invention guarantees the functionality of the engine in the most severe thermal environments avoiding drivability problems and increasing client satisfaction. Moreover, it guarantees its suitability in all markets, even in countries with a very hot climate.

In addition, for turboengines comprising an intercooler motor-fan-shroud system, it can provide the possibility of removing said intercooler motor-fan-shroud system rendering it obsolete, returning in cost reduction to the project and to the client.

Finally, operating an engine at a lower temperature air intake leads to a less thermically stressed system, charging less the alternator and battery, increasing battery life by not switch on the intercooler fan if it exists. In addition, it may lead to a better command of the engine returning a possibility to reduce fuel consumption.

Furthermore, the phenomena of the drop in pressure caused by the purge valve into the intake tube helps to get more quickly the fresh air coming from the air cooler as the drop pressure drags said fresh air quickly to the intake point.

In addition, the claimed invention is easy to implement, and it could be applied in all turbo engines in which it is observed temperature increase in intake system before engine collector.

It is also an object of the present invention an air intake stagnation cleaning method of an engine system. The engine system is according to the above described and the method comprises the following steps:
- determining the temperature of the air entering the turbocharged engine from the connecting pipe by means for determining said temperature,
- sending the measured temperature to the control unit,
- comparing in the control unit the measured temperature with a predetermined temperature value,
- if the measured temperature is over the predetermined temperature value opening the unidirectional purge valve so that the unidirectional purge valve purges air from the connecting pipe.

The method according to the claimed invention is then as follows: when the ECU observes that the temperature before the air intake manifold increases, for instance, over a certain threshold, it opens the purge valve, for instance, for a few milliseconds releasing the hot air to the underhood of the vehicle and thus an intake of fresh air is fed. It guarantees the full performance all the time and by all necessities.

### DESCRIPTION OF THE FIGURES

To complete the description and to provide for a better understanding of the invention, drawings are provided. Said drawings form an integral part of the description and illustrate preferred embodiments of the invention. The drawings comprise the following figures.
Figure 1 shows a schematic representation of a turbo engine architecture known in the state of the art.

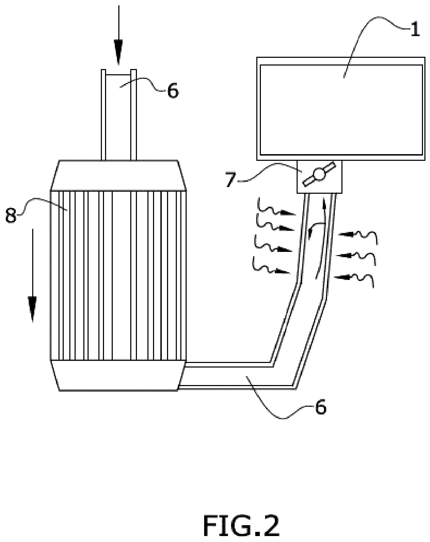

Figure 2 shows a schematic representation of an intake conduit upstream the compressor of a turboengine known in the state of the art.

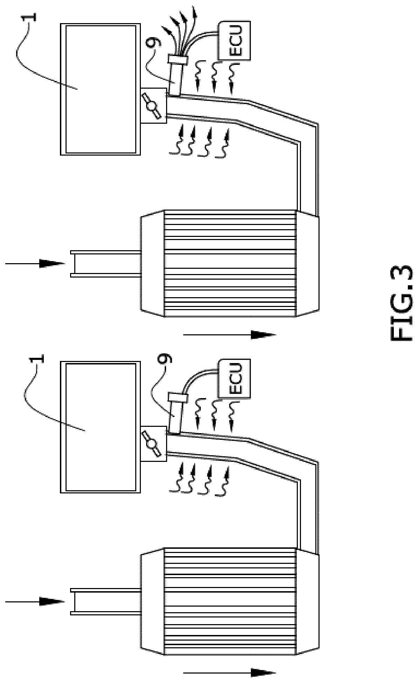

Figure 3 shows a schematic representation of an intake conduit upstream the compressor according to figure 2 in which an embodiment of the purge valve is located.
Figure 4 shows an intake tube and an intercooler motor-fan-shroud system known in the state of the art.

### DETAILED DESCRIPTION OF THE INVENTION

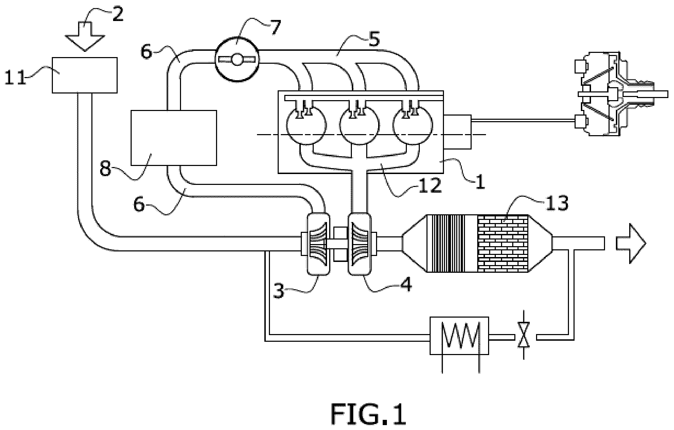

Figure 1 discloses a schematic view of a turbo engine architecture known in the state of the art. In the shown embodiment, the engine (1) comprises a three-cylinder engine, which is associated with an air intake circuit and with an exhaust gas circuit. On that embodiment, an internal combustion engine structure involving a turbocharger (1), comprises an air inlet (2), an air filter (11), a conduit for conveying air to the compressor (3), then a connecting pipe (6) connecting said compressor (3) to an intake manifold (5) placed upstream of the engine (1), to convey supercharged air to said engine (1), passing through a supercharged air cooler (8).

The flow of supercharged air is regulated in the connecting pipe (6) by means of the air intake throttle (7), which can be placed between the air cooler (8) and the intake manifold (5).

The exhaust gases exit the engine (1) via an exhaust manifold (12), which conveys said burnt gases to the turbine (4) by means of a connecting pipe, the air leaving the turbine (4) being directed towards an after-treatment device, for instance, a catalyst (13) before being evacuated to the outside of the vehicle. The catalyst (13) may comprise a three way-catalyst if the engine is a spark ignition engine and a gasoline particulate filter. Of course, variants are possible, for instance if the engine is a Diesel engine the 3WC will be replaced by a Diesel Oxydation Catalyst.

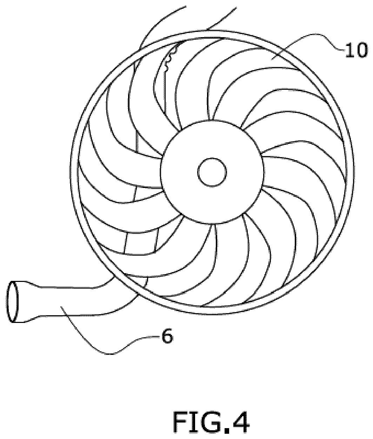

As shown in figure 4, the intercooler motor-fan-shroud device (10) located in the vicinity of the connecting pipe (6) that helps to reduce the warm air in the underhood of the vehicle is of considerable size. Thus, freeing the vehicle of said device, which is also complex and requires maintenance, is of considerable value.

In an embodiment, the unidirectional purge valve (9) is located in the proximity, near, of the air intake throttle (7), more precisely at the inlet of the air intake throttle (7). Alternatively, the unidirectional purge valve (9) can be located in the air intake throttle (7) itself.

The turbocharged engine system already comprises a temperature sensor configured for providing the temperature of the intake of the turbocharged engine (1). In an embodiment the means to determine the temperature of the air entering the turbocharged engine (1) is said temperature sensor.

To the contrary, the means for determining the temperature of the air entering the turbocharged engine (1) can be an additional temperature sensor, not represented in the figures. Said temperature sensor may be located, for instance, in the connecting pipe (6), more particularly in the proximity of the air intake throttle (7).

Alternatively, the temperature sensor may be located in, i.e., inside the air intake throttle (7).

As per the invention, the engine system as described hereabove is operated according to the method comprising to following steps:
- determining the temperature of the air entering the turbocharged engine (1) from the connecting pipe (6) by the means for determining said temperature,
- sending the measured temperature to the control unit (10),
- comparing in the control unit (10) the measured temperature with a predetermined temperature value,
- if the measured temperature is over the predetermined temperature value opening the unidirectional purge valve (9) so that the unidirectional purge valve (9) purges air from the connecting pipe (6).

## Claims

1. Engine system comprising an air intake stagnation cleaning device, the engine system comprising:
- a turbocharged engine (1),
- an intake manifold (5) in connection with the turbocharged engine (1) configured for directing air towards the turbocharged engine (1),
- an air intake (2),
- a compressor (3) of a turbo-compressor in connection with the air intake (2) and configured for compressing the air taken through the air intake (2) and in connection with the intake manifold (5) for directing the compressed air towards the intake manifold (5),
- a connecting pipe (6) connecting the compressor (3) with the intake manifold (5),
- a turbine (4) of the turbo-compressor, the compressor (5) being coupled to the turbine (4),
- a cooler (8) located in the connecting pipe (6) for cooling the air compressed by the compressor (5),
- an air intake throttle (7) located between the connecting pipe (6) and the intake manifold (5),
**characterized in that** the air intake stagnation cleaning device comprises:
- a unidirectional purge valve (9) located in the connecting pipe (6) between the cooler (8) and the air intake throttle (7),
- means for determining the temperature of the air entering the turbocharged engine (1) from the connecting pipe (6), and
- a control unit (10) in communication with the unidirectional purge valve (9) and with the means for determining the temperature and being configured to receive a measured temperature from the means for determining the temperature, to compare it with a predetermined temperature value and to open and/or close the unidirectional purge valve (9) as a result of the comparison so that the unidirectional purge valve (9) purges air from the connecting pipe (6).

2. Engine system, according to claim 1, wherein the unidirectional purge valve (9) is located in the proximity of the air intake throttle (7).

3. Engine system, according to claim 1, wherein the unidirectional purge valve (9) is located in the air intake throttle (7).

4. Engine system, according to any preceding claim, wherein the engine system comprises a temperature sensor configured for providing the temperature of the intake of the turbocharged engine (1) being the means to determine the temperature of the air entering the turbocharged engine (1) said temperature sensor.

5. Engine system, according to any preceding claim 1 to 3, wherein the means for determining the temperature of the air entering the turbocharged engine (1) are a temperature sensor.

6. Engine system, according to claim 5, wherein the temperature sensor is located in the connecting pipe (6).

7. Engine system, according to claim 6, wherein the temperature sensor is located in the proximity of the air intake throttle (7).

8. Engine system, according to claim 5, wherein the temperature sensor is located in the air intake throttle (7).

9. Engine system, according to any preceding claim, wherein the control unit (10) is configured for opening the unidirectional purge valve (9) for milliseconds.

10. Air intake stagnation cleaning method of an engine system, the engine system according to any preceding claim wherein the method comprises the following steps:
- determining the temperature of the air entering the turbocharged engine (1) from the connecting pipe (6) by the means for determining said temperature,
- sending the measured temperature to the control unit (10),
- comparing in the control unit (10) the measured temperature with a predetermined temperature value,
- if the measured temperature is over the predetermined temperature value opening the unidirectional purge valve (9) so that the unidirectional purge valve (9) purges air from the connecting pipe (6).
